# EUROPEAN PATENT APPLICATION

(11) **EP 1 923 766 A1**
(43) Date of publication of application: **21.05.2008**
(21) Application number: 07380315.7
(22) Date of filing: 12.11.2007
(51) Int. Cl.: G06F 1/16, A45C 5/06, A45C 11/00, A45C 13/02

(54) **Adapted briefcase for laptops**

(30) Priority: 17.11.2006 ES 200602554 U
(71) Applicant: Rubio Caro, Carlos José, 41700 Dos Hermanas-Sevilla (ES)
(72) Inventor: Rubio Caro, Carlos José, 41700 Dos Hermanas-Sevilla (ES)
(74) Representative: Gil-Vega, Victor

(57) **Abstract**

The present invention refers to a utility laptop briefcase model, which has been conceived to connect the laptop while at the same time incorporating all the additional elements of a desktop computer to increase the features of the laptop without transport hindrances.

It is composed of a rigid briefcase, which is divided into external and internal compartments. The external compartments have been designed to store documents (4), the mouse (2), a fold-down mouse pad flap (3) and the laptop computer (1) itself. The internal compartments including two treble speakers (5), a subwoofer speaker (6), a power source (7) for the laptop, an amplifier (8) for the sound system, an audio transformer (9) connected to the aforementioned amplifier, two cooler fans (10), the audio and power cables (11) and their respective connections (12).

## Description

### OBJECT OF THE INVENTION

In short, this specification refers to a utility laptop briefcase model, which has been conceived to connect the laptop while at the same time incorporating all the additional elements of a desktop computer to increase the features of the laptop without transport hindrances.

### BACKGROUND OF THE INVENTION

Everyone knows that the revolution computer industry launches new accessory for the various computer models-both desk-top and laptop-on a daily basis. Thus, with desktop computers, space is not a high-priority, as most are mounted on especially adapted/designed furniture and to such an extent that there are departments to house the various accessories.

In the case of laptop computers, where their small size and transportability are high-priority, the story is substantially different. Therefore, when the need arises to travel with a laptop computer, all the essential accessories are stored in the carrying case, including the power source and mouse-which cannot be used in some cases due to the lack of space, such as at airports, or on trains.

In comparison with desktops, the extensive variety of laptop computers on the current market is still unable to provide the equivalent acoustic benefits. In fact, if you want to increase laptop sound quality, you must use additional accessories, with added inconveniences when travelling. In addition to the already mentioned equipment in the carrying case, you need the appropriate set of speakers, plus the corresponding power cables to connect them to the computer.

In short, if you want a laptop with the advantages of a desktop, you have accept the inconvenience of having to transport a number of accessories and, subsequently, the installation is more complex, with more cables to be connected every time that the computer is started up and a more space for each of the additional components.

Thus the "Adapted briefcase for laptops," the object of this invention, solves the previously mentioned problem, offering the technical features for improved portable acoustics, without complicating transportation and facilitating its use in small spaces.

### DESCRIPTION OF THE INVENTION

When detailing the invention, the "Adapted briefcase for laptops" is composed of a rigid briefcase, which is divided into external and internal compartments.

Thus, the external compartments have been designed to store documents, the mouse and the laptop computer itself, while the internal compartments contain the following fixed elements:
1. A power source for the laptop with a standard, in-coming voltage (220 V) plug and an adjustable out-going, 15 and 25 V voltage jack for the various computers available on the market
2. A power source for the sound amplifier
3. A 3 to 20+ W amplifier
4. Three speakers: two treble and one bass
5. Two small fans to cool the various elements
6. Power and audio cables
7. A fold-down mouse pad flap

Thus, the "Adapted briefcase for laptops" allows you to use of the power source when required, without having to remove it from the briefcase. It offers quality sound, without having to carry around additional speakers or amplifiers, and allows you to use the mouse thanks to a specific flap and with no need to connect cables, as they are internal.

Likewise, and bearing in mind that the amplifier requires 12 V-a standard market product-and since in the voltage from the power source is not the same, a battery has been foreseen as an additional element to the power source, to obtain a longer performance time from the amplifier.

### DESCRIPTION OF THE FIGURES

The visuals for the "Adapted briefcase for laptops" are shown below. These figures provide a practical description of the invention.
- Figure (1): Front view of the "Adapted briefcase for laptops"
- Figure (2): Main Section of the "Adapted briefcase for laptops"

The following is the key to the numbered elements in these figures:
(1): Space for portable computer
(2): Space for mouse
(3): Fold-down mouse pad
(4): Storage areas for paper
(5): Two treble speakers
(6): Subwoofer speaker
(7): Power source
(8): Amplifier
(9): Audio transformer
(10): Fans
(11): Cables for audio and power
(12): Connections

### PREFERRED EMBODIMENT

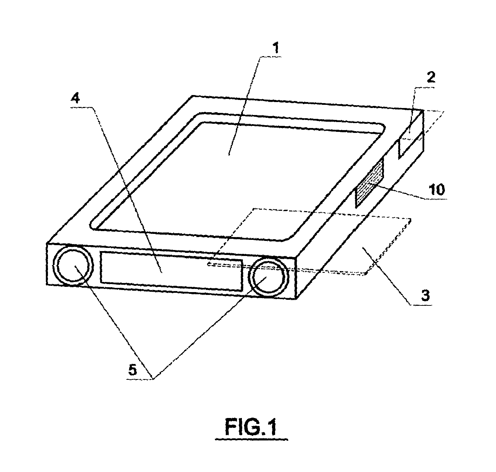

Figure 1 offers an example the standard "Adapted briefcase for laptops." It is made of a closed, rigid box containing various spaces conceived for the following elements on the internal surface: the laptop (1) including a safety clip for secure transport, the mouse (2), the fold-down flap mouse pad (3) and the document compartments (4).

Thus, the mouse pad (3) with the corresponding guides and stopper can be unfolded or secured depending on whether you want to use the computer or carry the briefcase.

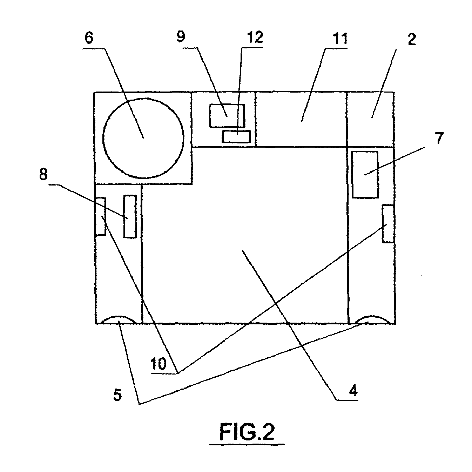

Inside the briefcase, there are several inaccessible compartments to house the elements listed in figure 2, including two treble speakers (5), a subwoofer speaker (6), a power source (7) for the laptop, an amplifier for the sound system (8), a audio transformer (9) connected to the aforementioned amplifier, two cooler fans (10), the audio and power cables (11) and their respective connections (12).

Lastly, the sizes of the sections adapt to the laptops currently available on the market, while the whole thing can be carried inside a suitable canvas or nylon case with a handle and zippers or velcro.

There is no need to deepen into details as any expert in this field can understand the reach of the invention and the advantages it offers. The materials used, shape, size, number and layout of the elements as described, are always subject to variations, provided that this do not translate into changes in the essence of the invention.

## Claims

1. Adapted briefcase for laptops **characterized in that** it is carried out from a rigid, briefcase-size box, the configuration thereof being arranged according with external and internal compartments.

2. Adapted briefcase for laptops, according to claim 1, **characterized by** *external compartments* (1,2,3,4) in order to keep the mouse, the fold-down mouse pad, the laptop itself and some documents, and by *interior compartments* containing the following elements:
• A power source (7) for the laptop computer with a standard (220 V) voltage plug and adjustable 15 and 25 W jack for the various computers elements currently available on the market.
• Power source for the sound system amplifier (8).
• A 3 to 20 W amplifier, minimum.
• Two treble speakers (5) and one bass (6).
• Fans (10) to cool the various elements.
• Power and audio connections (10,11).
